# FASCICULE DE BREVET EUROPEEN

(11) **EP 0 417 250 B1**
(45) Date de publication et mention de la délivrance du brevet: **14.12.1994**
(21) Numéro de dépôt: 90905563.4
(22) Date de dépôt: 27.03.1990
(51) Int. Cl.: B01D 1/18

(54) **Dispositif de séparation des matières en suspension ou en solution dans un liquide et ses domaines d'application**
Vorrichtung zum Abtrennen von suspendierten oder gelösten Stoffen aus Flüssigkeiten und ihre Anwendungsgebiete
Device for separation of materials suspended or dissolved in a liquid and application fields

(30) Priorité: 28.03.1989 FR 8904122
(43) Date de publication de la demande: 20.03.1991
(73) Titulaire: SOCIETE M.A.T.S.A., F-51210 Montmirail (FR)
(72) Inventeur: BIDON, Daniel, F-02400 Château-Thierry (FR)
(74) Mandataire: Gérardin, Robert Jean René
(86) Numéro de dépôt international: FR9000205
(87) Numéro de publication internationale: WO9011113

(56) Documents cités:
- EP-A- 33 144
- EP-A- 97 484
- EP-A- 250 164
- DE-A- 2 308 061
- DE-A- 2 925 988
- DE-B- 1 230 402
- DE-B- 2 355 660
- US-A- 1 866 769

## Description

L'invention concerne un dispositif de séparation de matières en suspension ou en solution dans un liquide, et leurs domaines d'application.

On connaît déjà différents procédés et moyens permettant d'assurer la séparation des matières contenues dans un liquide, parmi lesquels on peut principalement citer : la décantation, l'évaporation, la filtration et la centrifugation.

La décantation et l'évaporation exigent des surfaces assez importantes et font appel à des processus physiques assez lents qui en limitent la capacité.

Quant à la filtration, elle ne peut s'envisager que pour des liquides peu chargés, ne provoquant pas un colmatage trop rapide des filtres se traduisant par des pertes de charge réduisant progressivement le débit et, par conséquent, le rendement de l'installation.

La centrifugation, qui permet une séparation sélective particulièrement précise des particules, ne peut se concevoir que pour la transformation de petits volumes de fluides spécifiques.

On connaît déjà des dispositifs fonctionnant selon le préambule de la revendication 1 (brevet US-A-1866769 et EP-A-0250164). Toutefois, ces dispositifs, qui font appel, pour le premier, à un circuit de réfrigération assez complexe, et le second, aux propriétés de l'électrostatisme, ne permettent pas, de ce fait, de traiter, de façon satisfaisante, des quantités importantes de liquide chargé, dans une proportion assez irrégulière, de matières en suspension ou en solution, difficiles à définir de façon précise, comme c'est notamment le cas avec les eaux usées.

La présente invention a pour but de remédier à ces inconvénients. Cette invention, telle qu'elle est caractérisée dans les revendications, résout le problème consistant à créer un dispositif permettant d'assurer la séparation très précise et complète des éléments liquides et solides constituant un fluide, sur une plage très importante de débit.

Les avantages obtenus, grâce à cette invention, consistent, essentiellement, en ce qu'elle permet d'assurer la vaporisation de tout fluide chargé, comportant des matières dissoutes ou en suspension, dont la gazéification et la solidification sont compatibles avec l'environnement, et d'assurer le recyclage sélectif des composants liquides et solides contenus dans un fluide, ou d'assurer, en continu, le dépôt de la charge sur une surface en défilement.

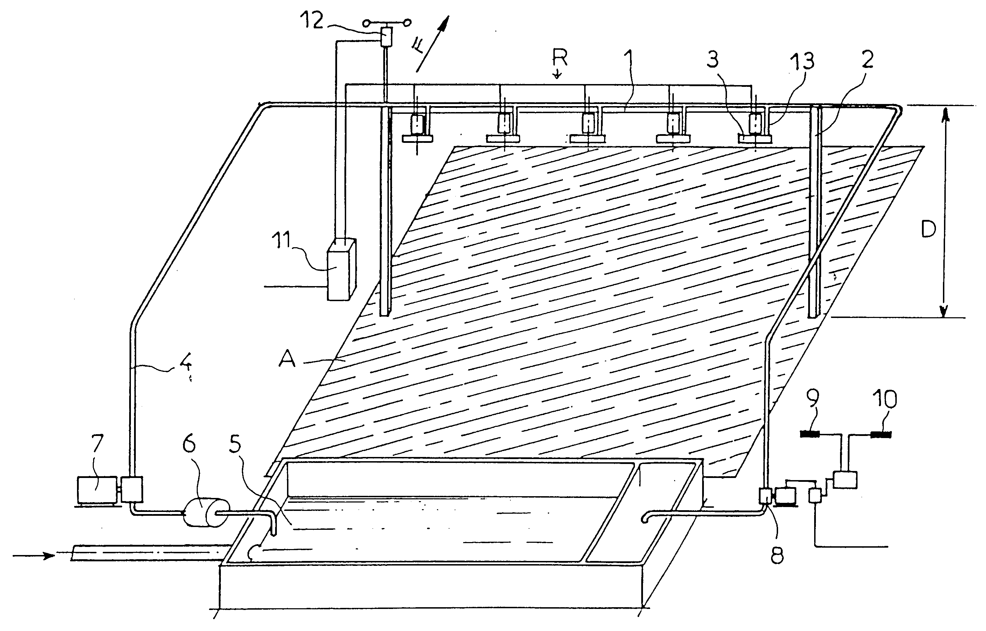

D'autres caractéristiques et avantages apparaîtront dans la description qui va suivre d'un mode de réalisation de l'invention destiné à l'épuration des eaux usées, donné à titre d'exemple non limitatif au regard du dessin annexé représentant une vue schématique en perspective de l'installation.

L'installation d'épuration selon l'invention est constituée, principalement, d'une traverse 1, supportée par des mâts 2, de hauteur D à laquelle sont fixées des têtes de pulvérisation 3, alimentées en circuit fermé par l'intermédiaire d'une conduite 4 aspirant dans un bassin 5 par l'intermédiaire d'un filtre 6 et d'une moto-pompe 7 et refoulant, dans le même bassin 5, par l'intermédiaire d'une vanne motorisée 8, contrôlée par deux capteurs 9 et 10 mesurant, respectivement, la température et l'hygrométrie de l'air. Les moteurs d'entraînement des têtes de pulvérisation 3 sont alimentés en énergie électrique par l'intermédiaire d'un onduleur 11, contrôlé par un capteur anémométrique 12.

En examinant plus en détail le schéma représenté sur le dessin, on remarque que, dans cet exemple se rapportant au traitement des eaux usées, l'eau chargée, contenue dans le bassin 5, est aspirée par la moto-pompe 7 à travers un filtre 6 pour être refoulée dans une conduite 4, dont le débit de retour vers le bassin 5 est déterminé par une vanne motorisée 8 ou par la moto-pompe 7 elle-même, dans la mesure où celle-ci est conçue pour fournir un débit variable.

Sur la conduite 4, sont montées des dérivations 13, qui alimentent les têtes de pulvérisation 3 constituant la rampe R en liquide chargé. Les conditions optimums de séparation sont obtenues en fonction des caractéristiques physiques de l'environnement par l'intermédiaire de capteurs de mesure de la température, de l'hygrométrie et du débit d'air, par asservissement du débit de fluide dans la conduite à la température et à l'hygrométrie, et la vitesse de rotation des buses tournantes des têtes de pulvérisation à la vitesse du flux d'air par l'intermédiaire de l'onduleur 11 contrôlé par l'anémomètre 12, afin d'adapter la dimension des gouttes de liquide à la vitesse de déplacement de l'air.

Ainsi, la dimension des gouttes de liquide chargées et le débit de pulvérisation sont déterminés automatiquement, afin que les éléments liquides soient totalement vaporisés avant d'avoir franchi le périmètre de l'aire de collecte A et que les particules en suspension ou les matières dissoutes soient retombées d'une dénivellation déterminée D sur la dite aire de collecte, d'où elles pourront être ensuite éliminées ou utilisées.

On conçoit aisément que le flux d'air (F) puisse être d'origine naturelle ou artificielle en créant, par exemple, celui-ci à l'entrée d'un tunnel par l'intermédiaire de ventilateurs, avec condensation de la vapeur produite à la sortie.

Il est possible, par ce moyen, d'obtenir une dessalinisation partielle ou totale de l'eau de mer, avec récupération d'une saumure très concentrée sur l'aire de collecte A.

Il est possible aussi d'obtenir, par ce moyen, la transformation de matières pulvérulentes en flocons ou granulés de dimensions précises, qui se déposeront sur une bande transporteuse assurant leur manutention vers un lieu de transformation ou de conditionnement.

Du lait en poudre peut être obtenu à partir de lait frais en utilisant ce dispositif.

Ce dispositif permet d'éliminer les sels métalliques dissous dans un liquide. La filtration du flux d'air, en limite extrême de l'aire de collecte, permet de retenir les particules solides de petite taille, qui, compte-tenu de leur faible masse, restent en suspension dans le flux gazeux.

Plus généralement, la qualité de spectrométrie obtenue par les têtes de pulvérisation permet leur utilisation dans tous les domaines où l'on recherche des dépôts en couche fine d'épaisseur contrôlée : puisque les dites têtes peuvent, selon le débit et la vitesse de rotation, produire des gouttes de diamètre 10 à 800 micromètres.

## Revendications

1. Dispositif de séparation de matières en suspension ou en solution dans un liquide par pulvérisation très fine du fluide ainsi constitué dans un flux d'air (**F**), afin d'obtenir une vaporisation quasi-instantanée des éléments liquides, provoquant, ainsi, la précipitation par gravité des éléments solides résultant de la cristallisation des matières dissoutes, ou la séparation des matières en suspension et leur concentration sur une aire de collecte (**A**) située en aval d'une rampe (**R**) par rapport au sens du flux des gouttes, en respectant une dénivellation déterminée (**D**) entre la rampe (**R**) et l'aire de collecte (**A**), caractérisé en ce que la rampe (**R**) est constituée, principalement, d'une traverse (**1**), supportée par des mâts (**2**), à laquelle sont fixées des têtes de pulvérisation (**3**) alimentées par l'intermédiaire de dérivations (**13**) réalisées sur une conduite (**4**) aspirant dans un bassin (**5**) par l'intermédiaire d'un filtre (**6**) et d'une moto-pompe (**7**) et refoulant dans le même bassin (**5**) par l'intermédiaire d'une vanne motorisée (**8**), et en ce que l'aire de collecte (**A**) des éléments solides du fluide est disposée parallèlement à la traverse (**1**) supportant les têtes de pulvérisation (**3**) et perpendiculairement aux mâts (**2**).

2. Dispositif selon la revendication 1, caractérisé en ce que la vanne motorisée (**8**) est contrôlée par deux capteurs (**9,10**) mesurant, respectivement, la température et l'hygrométrie de l'air.

3. Dispositif selon la revendication 1, caractérisé en ce que le débit de la moto-pompe (**7**) est contrôlé par deux capteurs (**9,10**) mesurant, respectivement, la température et l'hygrométrie de l'air.

4. Dispositif selon la revendication 1, caractérisé en ce que les moteurs d'entraînement des têtes de pulvérisation (**3**) sont alimentés en énergie électrique par l'intermédiaire d'un onduleur (**11**), contrôlé par un capteur anémométrique (**12**) situé dans le flux d'air (**F**).

5. Dispositif selon la revendication 1, caractérisé en ce que l'aire de collecte (**A**) surplombe une bande sans fin assurant la manutention de la collecte.

6. Application du dispositif selon les revendications 1 à 5 au traitement des eaux usées.

7. Application du dispositif selon les revendications 1 à 5 à la transformation du lait en poudre.

8. Application du dispositif selon les revendications 1 à 5 à la dessalinisation de l'eau de mer.

9. Application du dispositif selon les revendications 1 à 5 à la transformation de matières pulvérulentes en flocons ou en granulés.

## Claims

1. Separation device for materials which are in suspension or in solution in a liquid by very fine spraying of the fluid constituted in this way in an air flow (F), in order to obtain an almost instantaneous vaporization of the liquid elements, thus causing the precipitation by gravity of the solid elements resulting from the crystallization of the dissolved materials, or the separation of the materials in suspension and their concentration on a collection area (A) situated downstream of a spray boom (R) relative to the direction of the flow of the droplets, respecting a specific difference in level (D) between the spray boom (R) and the collection area (A), characterized in that the spray boom (R) is principally constituted by a crosspiece (1), supported by poles (2), to which the spray heads (3) are fixed, the latter being supplied via branch pipes (13) provided on a pipe (4) drawing from a tank (5) via a filter (6) and a motor-driven pump (7) and pumping back into the same tank (5) via a motorized valve (8), and in that the collection area (A) for the solid elements of the fluid is arranged parallel to the crosspiece (1) supporting the spray heads (3) and perpendicular to the poles (2).

2. Device according to claim 1, characterized in that the motorized valve (8) is controlled by two sensors (9, 10) measuring respectively the temperature and hygrometry of the air.

3. Device according to claim 1, characterized in that the supply to the motor-driven pump (7) is controlled by two sensors (9, 10) measuring respectively the temperature and hygrometry of the air.

4. Device according to claim 1, characterized in that the motors powering the spray heads (3) are electrically driven via a current inverter (11) controlled by an anemometric sensor (12) situated in the air flow (F).

5. Device according to claim 1, characterized in that the collection area (A) overhangs a conveyor belt ensuring the handling of the recovered material.

6. Use of the device according to claims 1 to 5 for the treatment of waste water.

7. Use of the device according to claims 1 to 5 for the conversion of milk into powder.

8. Use of the device according to claims 1 to 5 for the desalination of sea water.

9. Use of the device according to claims 1 to 5 for the conversion of powdered materials into flakes or granules.

## Patentansprüche

1. Vorrichtung zum Abtrennen von suspendierten oder gelösten Stoffen aus Flüssigkeiten durch sehr feine Zerstäubung der Flüssigkeit, die dann in einen Luftstrom (F) gebildet ist, um schließlich eine quasi-augenblickliche Verdampfung der flüssigen Elemente zu erhalten, was den Niederschlag der festen Elemente, die sich aus der Kristallisation des gelösten Materials ergeben, durch Gravitation oder die Abtrennung des suspendierten Materials und seine Konzentration auf einer Sammelfläche (A) veranlaßt, welche stromabwärts von einer Rampe (R) in Bezug auf den Flußrichtung der Tröpfchen unter Berücksichtigung eines vorgegebenen Höhenunterschiedes (D) zwischen der Rampe (R) und der Sammelfläche (A) angeordnet ist, dadurch gekennzeichnet, daß die Rampe (R) im wesentlichen einen Querträger (1) umfaßt, der durch Masten (2) abgestützt ist, an welchen Zerstäuberköpfe (3) befestigt sind, die durch Abzweigungen (13) versorgt werden, welche an einer Leitung (4) vorgesehen sind, die aus einem Becken (5) mittels eines Filters (6) und einer Motorpumpe (7) ansaugt und in das gleiche Becken (5) mittels eines motorbetriebenen Ventils (8) zurückspeist, und dadurch daß die Sammelfläche (A) für die festen Elemente der Flüssigkeit parallel zu dem Querträger (1), der die Zerstäuberköpfe (3) trägt, und senkrecht zu den Masten (2) angeordnet ist.

2. Vorrichtung nach Anspruch 1, dadurch gekennzeichnet, daß das motorbetriebene Ventil (8) durch zwei Sensoren (9, 10) gesteuert wird, welche jeweils die Temperatur und die Feuchtigkeit der Luft messen.

3. Vorrichtung nach Anspruch 1, dadurch gekennzeichnet, daß die Förderleistung der Motorpumpe (7) durch zwei Sensoren (9, 10) gesteuert wird, welche jeweils die Temperatur und die Feuchtigkeit der Luft messen.

4. Vorrichtung nach Anspruch 1, dadurch gekennzeichnet, daß die Motoren zum Antrieb der Zerstäuberköpfe (3) mittels eines Wechselrichters (11), der durch einen Windgeschwindigkeitsmesser (12) gesteuert wird, welcher sich in dem Luftstrom (F) befindet, mit elektrischer Energie versorgt werden.

5. Vorrichtung nach Anspruch 1, dadurch gekennzeichnet, daß die Sammelfläche (A) über einem Endlosband gebildet ist, das die Förderung des gesammelten Materials sicherstellt.

6. Anwendung der Vorrichtung nach einem der Ansprüche 1 bis 5 zur Behandlung von Abwasser.

7. Anwendung der Vorrichtung nach einem der Ansprüche 1 bis 5 zur Umwandlung von Milch in Pulver.

8. Anwendung der Vorrichtung nach einem der Ansprüche 1 bis 5 zur Entsalzung von Meerwasser.

9. Anwendung der Vorrichtung nach einem der Ansprüche 1 bis 5 zur Umwandlung von pulverförmigem Material in Flocken oder Körnchen.
